# EUROPÄISCHE PATENTANMELDUNG

(11) **EP 4 091 866 A1**
(43) Veröffentlichungstag der Anmeldung: **23.11.2022**
(21) Anmeldenummer: 22173802.4
(22) Anmeldetag: 17.05.2022
(51) Int. Cl.: B60L 53/18, B60L 53/30, B60L 53/66, B60L 53/60, B60L 53/62

(54) **LADEKABEL, LADESTATION LADESYSTEM UND VERFAHREN ZUM LADEN EINER TRAKTIONSBATTERIE EINES ELEKTROFAHRZEUGES**

(30) Priorität: 17.05.2021 DE 102021112750
(71) Anmelder: Webasto SE, 82131 Stockdorf (DE)
(72) Erfinder: Finsinger, Michael, 82131 Stockdorf (DE); Ruef, Robert, 82131 Stockdorf (DE); Haeussermann, Rudolf, 82131 Stockdorf (DE)
(74) Vertreter: Nordmeyer, Philipp Werner

(57) **Zusammenfassung**

Die vorliegende Erfindung betrifft ein Ladesystem (1), ein Verfahren, eine Ladestation (3) und ein Ladekabel (2) zur Übertragung elektrischer Energie von einer Ladestation (3) an eine Traktionsbatterie zum Laden der Traktionsbatterie, bevorzugt zum Laden einer Traktionsbatterie eines Elektrofahrzeugs (4). Das Ladekabel umfasst mindestens eine zur Signalübertragung ausgebildete und eingerichtete Leitung (22) und/oder mindestens eine zur Energieübertragung ausgebildete und eingerichtete Leitung (20), und einen Speicherbaustein (25), der zum Speichern kabelspezifischer Daten ausgebildet und eingerichtet ist. Der Speicherbaustein (25) ist mit mindestens einer der Leitungen (20, 22) kommunikativ verbunden, um über die verbundene Leitung (20, 22) zusätzlich zur Signalübertragung und/oder Energieübertragung eine Kommunikation mit der Ladestation (3) zu ermöglichen.

## Beschreibung

### Technisches Gebiet

Die vorliegende Erfindung betrifft ein Ladekabel, eine Ladestation und ein Ladesystem sowie ein Verfahren zur Übertragung elektrischer Energie von einer Ladestation an eine Traktionsbatterie zum Laden der Traktionsbatterie, beispielsweise zum Laden einer Traktionsbatterie eines Elektrofahrzeuges.

### Stand der Technik

Der Anteil von reinen Elektrofahrzeugen und Elektrohybridfahrzeugen, im Folgenden der Einfachheit halber als "Elektrofahrzeuge" bezeichnet, wächst kontinuierlich an. Entsprechend wächst auch die Notwendigkeit, geeignete Ladesysteme für die Übertragung elektrischer Energie von einer Ladestation an eine wiederaufladbare Traktionsbatterie des Elektrofahrzeuges bereitzustellen. Neue Ladestationen und Ladekabel sind daher entsprechend Gegenstand der aktuellen Forschung und Entwicklung.

Zur Energieübertragung zum Aufladen muss das Elektrofahrzeug, genauer gesagt die Traktionsbatterie, mit der Ladestation verbunden werden. In der Regel geschieht dies durch Verwendung eines entsprechend ausgebildeten Ladekabels.

Hinsichtlich der zum Laden der Traktionsbatterie verwendeten Energiemenge und deren Ermittlung ist zwischen privaten Ladestationen und kommerziellen Ladestationen zu unterscheiden. Private Ladestationen sind in der Regel einem bestimmten Nutzer zugeordnet. Beispielsweise kann eine private Ladestation in einer privaten Garage eines Nutzers eines Elektrofahrzeugs angebracht sein. Die zum Laden der Traktionsbatterie des privaten Nutzers mit seiner privaten Ladestation verbrauchte Energie kann einfach dadurch ermittelt werden, dass zwischen Stromnetz und Ladestation ein entsprechendes Messgerät geschaltet wird, oder alternativ das bereits für den Haushalt des Nutzers vorliegende Messgerät verwendet wird.

Anders gestaltet es sich bei kommerziellen Ladestationen, bei welchen ein Betreiber der Ladestation Nutzern von Elektrofahrzeugen gegen Gebühr das Aufladen ihrer Elektrofahrzeuge an der Ladestation des Betreibers zur Verfügung stellt. Bei derartigen kommerziellen Ladeverfahren möchte der Nutzer des Elektrofahrzeugs, mithin der Kunde des Betreibers, nur für die Energiemenge bezahlen, welche auch tatsächlich zum Laden seines Fahrzeugs, insbesondere seiner Traktionsbatterie, verwendet wurde, ohne dass dabei Energieverluste, die beispielsweise innerhalb der Ladestation oder im Ladekabel entstehen, berechnet werden. Bei kleinen Ladeströmen mag es möglich sein, die im Ladekabel entstehenden Verluste zu vernachlässigen. Bei größeren Strömen oder bei engen Toleranzen für die Ermittlung muss der entstehende Messfehler durch die Verluste in der Ladeleitung für die Energieberechnung jedoch beachtet werden.

Hierzu kann die seitens des Kunden zum Laden abgegriffene Energie am Entnahmepunkt gemessen werden. Dies geschieht in der Regel im fahrzeugseitigen Stecker des Ladekabels, mithin dem Ladestecker am Kabelende der Ladesäule, wenn das Kabel fest mit der Ladestation verbunden ist. Um die abgegebene Energie genau bestimmen zu können, ist entsprechend der Strom und die Spannung am Übergabepunkt zu ermitteln. Die Spannung ist hierbei am fahrzeugseitigen Steckverbinder bzw. am fahrzeugseitigen Ende des Ladekabels zu ermitteln. Dies kann beispielsweise über eine sogenannte Vierdrahtmessung bzw. Vierleitermessung erfolgen. Bei dieser Messung werden die Spannungen am fahrzeugseitigen Stecker bzw. Kabelende erfasst, wobei die Anzahl der zu erfassenden Spannungen abhängig ist von der Art des Kabels und der damit einhergehenden Leistungsübertragung, etwa ob die Energie via Gleichstrom oder Wechselstrom übertragen wird und mit wie vielen Phasen. Alternativ kann die Spannung an den Kabelklemmen der Ladestation, mithin dem ladestationsseitigen Ende des Ladekabels, erfasst werden, wobei dann zur Ermittlung der durch das Elektrofahrzeug abgegriffenen Energie die Verluste im Ladekabel von der an der Ladestation mittels der Spannung an den Kabelklemmen und dem gemessenen Strom ermittelbaren Energie abzuziehen sind. Die Verluste im Kabel bzw. die Kabelverluste können berechnet werden, wenn die hierfür relevanten Kabelparameter bekannt sind.

Zur Ermittlung der Spannung am fahrzeugseitigen Stecker des Ladekabels ist bei der Vierdrahtmessung jedoch im Ladekabel eine separate Sensleitungseinheit, welche sich in der Regel aus einem Aderpaar zusammensetzt, erforderlich. Beim Laden mittels Gleichstrom ist hierfür eine Sensleitungseinheit ausreichend. Wird zum Laden hingegen Wechselstrom verwendet, muss mindestens für jede Phase eine eigene Sensleitungseinheit bereitgestellt werden. Bei drei Phasen sind dies entsprechend drei Sensleitungseinheiten. Im Ladekabel müssten mithin sechs zusätzliche Adern bzw. Drähte allein für die Messung vorgesehen werden. In derzeit gängigen handelsüblichen Ladekabeln sind derartige Sensleitungen in der Regel nicht vorgesehen. Entsprechend fehlt es auch an derartigen Anschlüssen in den Steckern des Ladekabels. Zudem steigt die Komplexität des Aufbaus des Ladekabels mit steigender Phasenanzahl, was sich unter anderem bei der Installation (mehr Leitungen sind anzuschließen) und den Kabelkosten (mehr Leitungen im Kabel) bemerkbar macht.

Eine weitere Möglichkeit, die Verluste im Ladekabel zu ermitteln, ist die Berechnung bzw. Schätzung der Verluste über die hierzu erforderlichen Kabelparameter, insbesondere des Kabelwiderstandes, welcher sich wiederum aus der Länge der Leitung, dem spezifischen elektrischen Widerstand der Leitung und der Querschnittsfläche der Leiter ergibt. Die Kabelparameter müssen dann jedoch zwingend bekannt sein. Ferner muss der jeweiligen Ladestation ein eindeutig definiertes Kabel eindeutig und dauerhaft zugeordnet sein, da bei jedem Wechsel des Ladekabels auch die dem Ladekabel immanenten Kabelparameter andere sind.

Entsprechend ist es erforderlich, dass die Ladestation, bzw. deren Energiemessgerät, zum Berechnen der Kabelverluste die Kabelparameter speichern muss. Entsprechend kann die Ladestation, bzw. deren Energiemessgerät, dann mit keinem anderen Kabel verwendet werden, da dies die abrechnungsrelevanten Daten beeinflussen würde.

Bei Eingabe der Kabelparameter in die Ladestation während der Fertigung muss entsprechend sichergestellt werden, dass das definierte Kabel auch wirklich am Aufstellort der Ladestation verwendet wird. Oftmals geht dies mit behördlichen Vorgaben, insbesondere mit das Eichrecht betreffenden behördlichen Vorgaben, einher. Zudem führt die zwingende Einhaltung der Paarung von Ladekabel und Ladestation zu vertrieblichen und logistischer Herausforderungen, beispielsweise wenn der Betreiber der Ladestation und/oder der Kunde eine andere Kabellänge wünscht oder ein Versenden mit dem für die Ladestation definierten Kabel ein übermäßig großes Paketgewicht aufweist. Weiterhin führt eine derartige eindeutige Zuordnung von Ladekabel und Ladestation zu einem größeren vorzuhaltenden Lagerbestand des Herstellers.

Werden die Kabelparameter hingegen während der Installation am Aufstellort eingegeben, muss dies den oftmals vorhandenen behördlichen Anforderungen des Eichrechts entsprechen. So kann behördlich gefordert sein, dass der Installateur speziell geschult und oder behördlich beglaubigt ist.

Des Weiteren muss sichergestellt werden, dass die Einstellungen der Kabelparameter nicht unabsichtlich oder gar mit betrügerischer Absicht falsch eingestellt bzw. geändert werden können.

Um zumindest einigen der vorbeschriebenen Hürden Rechnung zu tragen, ist es bekannt, ein Ladekabel in Form eines "intelligenten Ladekabels" auszubilden, welches entsprechend eine Recheneinrichtung zum Ermitteln bzw. Errechnen der an das Elektrofahrzeug übertragenen Energiemenge und eine Kommunikationseinrichtung zum Übermitteln der ermittelten Energiemenge an eine Zentralsteuereinheit umfasst. Derartige Ladekabel sind beispielsweise aus der US 2020/231063 A1 oder der DE 10 2018 201 698 A1 bekannt. Derartige Ladekabel weisen einen komplexen Aufbau auf und sind entsprechend aufwendig zu fertigen und teuer. Nicht nur ist in diesen intelligenten Ladekabeln die Recheneinrichtung vorzusehen, sondern zusätzlich ebenfalls die Kommunikationseinrichtung mit zusätzlichen separaten Kommunikationskanälen, beispielsweise zusätzlichen Leitungen, welche für die Kommunikation notwendig sind.

### Darstellung der Erfindung

Ausgehend von dem bekannten Stand der Technik ist es eine Aufgabe der vorliegenden Erfindung, ein verbessertes Ladekabel zur Übertragung elektrischer Energie von einer Ladestation an eine Traktionsbatterie zum Laden der Traktionsbatterie, bevorzugt zum Laden einer Traktionsbatterie eines Elektrofahrzeugs, bereitzustellen. Ferner ist es eine Aufgabe, eine verbesserte entsprechende Ladestation, ein verbessertes entsprechendes Ladesystem und ein verbessertes entsprechendes Verfahren bereitzustellen.

Die Aufgabe wird durch ein Ladekabel mit den Merkmalen des Anspruchs 1 gelöst. Vorteilhafte Weiterbildungen ergeben sich aus den Unteransprüchen, der Beschreibung und den Figuren.

Entsprechend wird ein Ladekabel zur Übertragung elektrischer Energie von einer Ladestation an eine Traktionsbatterie zum Laden der Traktionsbatterie, bevorzugt zum Laden einer Traktionsbatterie eines Elektrofahrzeugs, vorgeschlagen, umfassend mindestens eine zur Signalübertragung ausgebildete und eingerichtete Leitung und/oder mindestens eine zur Energieübertragung ausgebildete und eingerichtete Leitung, und einen Speicherbaustein, der zum Speichern kabelspezifischer Daten ausgebildet und eingerichtet ist. Der Speicherbaustein ist mit mindestens einer der Leitungen kommunikativ verbunden, um über diese Leitung zusätzlich zur Signalübertragung und/oder Energieübertragung eine Kommunikation mit der Ladestation zu ermöglichen.

Mit anderen Worten ist mindestens eine Leitung, die primär zur Energieübertragung oder zur Signalübertragung vorgesehen ist, zusätzlich kommunikativ mit dem Speicherbaustein verbunden, um über diese Leitung den Zugriff auf die in dem Speicherbaustein gespeicherten kabelspezifischen Daten bereitstellen zu können. Entsprechend ist die mindestens eine der Leitungen funktional doppelt belegt, zum einen mit der primären Funktion der Energieübertragung, bevorzugt zur Energieübertragung zum Speicherbaustein, oder der Signalübertragung, und zum anderen mit der kommunikativen Kopplung mit dem Speicherbaustein, um ein Auslesen der kabelspezifischen Daten aus dem Speicherbaustein zu ermöglichen.

Dadurch ist es möglich, bereits im Kabel vorgesehene bzw. vorhandene Leitungen, bevorzugt Kleinsignal-Leitungen, mehrfach zu nutzen und so die kabelspezifischen Daten, mithin die zumindest zur Ermittlung des Kabelwiderstandes erforderlichen Parameter von dem Speicherbaustein auslesen bzw. abfragen zu können. Entsprechend weist das Ladekabel trotz der zusätzlichen Bereitstellung der kabelspezifischen Daten im Kabel selbst einen besonders einfachen Aufbau auf. Mithin ermöglicht die oben beschriebene Ausbildung des Ladekabels das Auslesen der Kabelparameter über eine sehr einfach aufgebaute Datenleitung.

Zudem ist es dadurch möglich, dass eine Ladestation, bzw. deren Energiemessgerät, beim Anschluss eines Ladekabels dessen kabelspezifischen Daten, mithin dessen Kabelparameter, selbstständig erkennt.

Ferner kann das Ladekabel an verschiedenen dazu eingerichteten Ladestationen angeschlossen werden, da jede der Ladestationen die kabelspezifischen Daten des Ladekabels auslesen kann. Entsprechend kann eine Ladestation auch mit verschiedenen auf die vorgeschlagene Weise ausgebildeten Ladekabeln, beispielsweise mit Ladekabeln unterschiedlicher Länge, betrieben werden, ohne, dass eine Vorkonfiguration der Ladestation notwendig ist. Weiterhin ist es nicht erforderlich, dass eine das Ladekabel an die Ladestation anschließende Person hierzu zwingend gesondert geschult sein muss, etwa in Hinblick auf behördliche Vorgaben beispielsweise hinsichtlich des Eichrechts.

Insbesondere kann ein Austausch eines Ladekabels durch den Betreiber einer Ladestation vor Ort der Ladestation vorgenommen werden, ohne dass eine etwaige vorliegende eichrechtliche Einstellung und/oder Versiegelung nach einer eichrechtlichen Abnahme beeinflusst wird.

Eine eichrechtliche Abnahme des Kabels und eine eichrechtliche Abnahme der Ladestation können ferner getrennt voneinander erfolgen. Folglich ist eine direkte Zuordnung einer bestimmten Ladestation mit einem bestimmten Ladekabel auch bei kommerziellem Einsatz der Ladestation nicht erforderlich. Die Versiegelung des Ladekabels und/oder der Ladestation können bereits bei der Fertigung, mithin ab Werk, erfolgen. Eine nochmalige eichrechtliche Abnahme am Aufstellungsort der Ladestation bzw. am Verwendungsort des Ladekabels ist nicht notwendig. Entsprechend kann eine Aufstellung der Ladestation für den Betreiber günstiger sein als bei herkömmlichen Ladestationen.

Weiterhin kann dadurch eine zusätzliche Erschwernis hinsichtlich einer Manipulation der zur Berechnung der Verluste im Kabel während des Ladens verwendeten kabelspezifischen Daten, anders ausgedrückt Kabelparameter, erzielt werden. Insbesondere kann dadurch sichergestellt werden, dass bei einem Austausch eines Ladekabels an einer Ladestation durch ein Ladekabel mit einem geringeren Kabelwiderstand, beispielsweise, da das neu angeschlossene Ladekabel kürzer ist als das entfernte Ladekabel, in der Ladestation nicht mit einem ansonsten in der Ladestation eingespeicherten festen Wert für den Kabelwiderstand, welchem jenen des entfernten Kabels entspricht, gerechnet wird.

Vorzugsweise ist mindestens eine Leitung zur Energieübertragung zur Übertragung von Energie an den Speicherbaustein bzw. zur Versorgung des Speicherbausteins mit elektrischer Energie ausgebildet.

Alternativ oder zusätzlich kann zumindest eine Leitung zur Energieübertragung zur Übertragung der zum Laden der Fahrzeugbatterie eines Elektrofahrzeuges vorgesehenen Energie ausgebildet sein.

Gemäß einer bevorzugten Ausführungsform ist die mindesten eine Leitung zur Energieübertragung zur Fahrzeugbatterie des Elektrofahrzeuges, auch "Powerleitung" bzw. "L1", "L2", "L3" genannt, unabhängig von den Signalleitungen und/oder anderen Leitungen zur Energieübertragung ausgebildet und/oder angeordnet, wobei bevorzugt eine Schutzkontakt-Leitung, auch "PE-Leitung" oder "Protective Earth" Leitung genannt, und/oder eine Neutralleiter-Leitung für die Kommunikation mit dem Speicherbaustein verwendet werden können, bevorzugt als Rückleiter bzw. als Logik-GND.

Gemäß einer bevorzugten Ausführungsform kann das Ladekabel in einem "Laden"-Modus betreibbar sein, in welchem die elektrische Energie zum Laden der Traktionsbatterie übertragen wird, bevorzugt über mindestens eine Leitung zur Energieübertragung, welche beispielsweise die mit dem Speicherbaustein kommunikativ verbundene Leitung sein kann, und/oder Signale, bevorzugt Sensorsignale, über mindestens eine Leitung zur Signalübertragung übertragen werden, welche beispielsweise die mit dem Speicherbaustein kommunikativ verbundene Leitung sein kann.

Das Ladekabel kann ferner ausgebildet und eingerichtet sein, in einem "Kein-Laden"- Modus betreibbar zu sein, in welchem kein Übertragen der elektrischen Energie zum Laden der Traktionsbatterie erfolgt und vorzugsweise keine Signale übertragen werden. Das Ladekabel kann dabei eingerichtet und ausgebildet sein, die Kommunikation mit dem Speicherbaustein im "Kein-Laden"-Modus bereitzustellen. So kann eine effektive doppelte Nutzung der Leitungen, nämlich zu ihrem primären Zweck, der Energieübertragung und/oder Signalübertragung im "Laden-"Modus, und ihrem zusätzlichen Zweck, nämlich der kommunikativen Kopplung mit dem Speicherbaustein, um ein Auslesen der kabelspezifischen Daten aus diesem bereitzustellen, erzielt werden.

Vorzugsweise ist der Speicherbaustein in einem Kabelstecker und/oder im Kabelstrang angeordnet. Wenn der Speicherbaustein komplett im Stecker angeordnet ist, kann der Kabelstrang des Ladekabels im Wesentlichen in herkömmlicher Weise aufgebaut sein. Insbesondere kann dann der Kabelstrang lediglich die ohnehin zur Energieübertragung und/oder Signalübertragung vorgesehenen Leitungen umfassen, optional mit einer etwaige vorgesehenen äußeren Ummantelung, und bevorzugt sogar aus dem vorgenannten Teilen bestehen. Vorzugsweise ist eine Kontaktierung der mindestens einen Leitung mit dem Speicherbaustein im Stecker verwirklicht.

Gemäß einer weiteren bevorzugten Ausführungsform ist der Speicherbaustein mit zumindest zwei, bevorzugt mit genau zwei Leitungen zur Energieübertragung, bevorzugt zur Energieübertragung zum Speicherbaustein, und/oder Signalübertragung kommunikativ verbunden.

Gemäß einer weiteren bevorzugten Ausführungsform umfassen die kabelspezifischen Daten zumindest eines aus einer Länge des Ladekabels und/oder einer Länge des Kabelstranges, einem Kabelwiderstand, bevorzugt einem Kabelwiderstand der Powerleitungen des Ladekabels, einem spezifischen Kabelwiderstand pro vorgegebener Längeneinheit, einem spezifischen Leitungswiderstand zumindest einer der Leitungen, einer Querschnittsfläche zumindest einer der Leitungen, und/oder einer Information über die Art des Kabels, wobei die Information zumindest eines aus einer Information über die Ladespannungsart, bevorzugt Wechselstrom oder Gleichstrom, über eine Anzahl der Phasen des Kabels, einem Fertigungsstandort, einer Seriennummer, einem Hersteller.

Der Speicherbaustein kann optional ausgebildet und eingerichtet sein, die kabelspezifischen Daten offen oder verschlüsselt und/oder signiert zu speichern und/oder offen oder verschlüsselt und/oder signiert abrufbar bereitzustellen. So kann eine Kommunikation mit anwendungsfallspezifischer Sicherheit bereitgestellt werden.

Es hat sich als besonders vorteilhaft herausgestellt, wenn zumindest eine mit dem Speicherbaustein verbundene Leitung zur Signalübertragung eine Signalleitung für einen Sensor, bevorzugt einen Temperatursensor, besonders bevorzugt einen einem Leiterkontakt eines Steckers des Ladekabels zugeordneten Temperatursensor, eine Näherungs-Signalleitung, auch "PP-Leitung" oder "Proximity Pilot" Leitung genannt, oder eine Steuersignalleitung, auch "CP-Leitung" oder "Control Pilot" Leitung genannt, zum Austauschen von Steuersignalen zwischen Elektrofahrzeug und Ladestation ist.

Der Speicherbaustein kann vorzugsweise mit mindestens einer Leitung zur Signalübertragung, bevorzugt einer Steuersignalleitung zum Austauschen von Steuersignalen zwischen Elektrofahrzeug und Ladestation, und/oder mindestens einer Leitung zur Energieübertragung, bevorzugt einer Schutzkontakt-Leitung , auch "PE-Leitung" oder "Protective Earth" Leitung genannt, und/oder mit einer Neutralleiter-Leitung mit dem Speicherbaustein zur Versorgung des Speicherbausteins mit elektrischer Energie durch die Ladestation verbunden sein, wobei bevorzugt die mindestens eine Leitung mit dem Speicherbaustein zur Versorgung mit elektrischer Energie und/oder zur Kommunikation verbunden ist.

Alternativ kann eine hierzu mit dem Speicherbaustein verbundene Leitung auch eine Leitung zur Signalübertragung in Form einer Signalleitung für einen Sensor, bevorzugt einen Temperatursensor, eine Näherungs-Signalleitung, eine Leiterkontakt-Leitung oder einer Neutralleiter-Leitung sein, wobei bevorzugt dieser Sensor in eine 1-Wire-Kommunikation integriert ist. Das 1-Wire-Kommunikationsnetzwerk ist hierbei nicht auf einen Sensor beschränkt, sondern kann beliebig erweitert werden.

Gemäß einer weiteren bevorzugten Ausführungsform umfasst der Speicherbaustein ein Speichermedium, vorzugsweise einen EEPROM, wobei der Speicherbaustein bevorzugt ferner eine Recheneinheit, vorzugsweise einen Microcontroller (µC), bevorzugt mit integriertem Speichermedium, umfasst, wobei der Speicherbaustein bevorzugt ein 1-Wire-Speicherchip ist, wobei die Recheneinheit bevorzugt mit zumindest einer weiteren Leitung zur Signalübertragung, bevorzugt einer weiteren Signalleitung für einen weiteren Sensor, bevorzugt einen Temperatursensor, verbunden ist. Der Speicherbaustein kann auch aus einem der vorgenannten Ausführungen bestehen. Insbesondere kann der Speicherbaustein ein Speichermedium, vorzugsweise ein EEPROM, ein Microcontroller, vorzugsweise mit integrierten oder externen Speichermedium, oder ein 1-Wire-Speicherchip sein.

Gemäß einer weiteren bevorzugten Ausführungsform ist der Speicherbaustein mit zumindest zwei Leitungen verbunden, wobei bevorzugt der Speicherbaustein mit zwei Signalleitungen eines Sensors, bevorzugt eines Temperatursensors verbunden ist. Mit anderen Worten kann der Speicherbaustein mit einem Leitungspaar eines Sensors kommunikativ verbunden sein.

Alternativ kann Speicherbaustein mit einer Signalleitung eines ersten Sensors, bevorzugt eines Temperatursensors, und mit einer Signalleitung eines weiteren Sensors, bevorzugt eines weiteren Temperatursensors, verbunden sein.

Weiterhin ist es möglich, dass der Speicherbaustein mit einer Leitung zur Signalübertragung, bevorzugt einer Signalleitung eines Sensors des Ladekabels, und mit einer Leitung zur Energieübertragung, vorzugsweise einer Schutzkontakt-Leitung (PE-Leitung), kommunikativ verbunden ist.

Gemäß einer weiteren bevorzugten Ausführungsform können mindestens eine Leitung zur Signalübertragung und/oder Energieübertragung sowie ein Microcontroller mit integriertem oder externem Speichermedium die Ladestation mit dem Speicherbaustein sowie einer vorgegebenen Anzahl von Sensoren, vorzugsweise Temperatursensoren, kommunikativ verbinden und versorgen, wobei die vorgegebene Anzahl von Sensoren analoge und/oder digitale Sensoren sein können.

Eine der oben genannten Aufgaben wird ferner durch eine Ladestation zur Übertragung elektrischer Energie an eine Traktionsbatterie zum Laden der Traktionsbatterie, bevorzugt zum Laden einer Traktionsbatterie eines Elektrofahrzeugs, mit den Merkmalen des Anspruchs 12 gelöst. Vorteilhafte Weiterbildungen ergeben sich aus den Unteransprüchen, der Beschreibung und den beigefügten Figuren.

Entsprechend wird eine Ladestation zur Übertragung elektrischer Energie an eine Traktionsbatterie zum Laden der Traktionsbatterie, bevorzugt zum Laden einer Traktionsbatterie eines Elektrofahrzeugs, vorgeschlagen, umfassend zumindest einen Ladekabelanschluss zum Anschließen eines Ladekabels mit zumindest einem Leiterkontakt zum Kontaktieren einer Leitung zur Energieübertragung des Ladekabels und/oder zumindest einem Signalkontakt zur Kontaktierung einer Leitung zur Signalübertragung des Ladekabels, und ferner umfassend eine mit dem zumindest einen Leiterkontakt und/oder Signalkontakt verbundenen Rechenvorrichtung zum Berechnen von während der Energieübertragung an die Traktionsbatterie im an dem Ladekabelanschluss angeschossenen Ladekabel auftretenden Verlusten mittels kabelspezifischer Daten.

Vorzugsweise ist die Rechenvorrichtung ausgebildet zum Messen des an das Ladekabel abgegebenen Stroms und der am ladestationsseitigen Ende des Ladekabels anliegenden Spannung für die Energieberechnung. Entsprechend kann die Rechenvorrichtung als Energiemessgerät ausgebildet sein bzw. Energiemessfunktionalität umfassen. Alternativ umfasst die Rechenvorrichtung hierzu ein Energiemessgerät oder ist mit einem Energiemessgerät der Ladestation verbunden.

Die Rechenvorrichtung ist bevorzugt ausgebildet, die im Ladekabel entstehende Verlustleistung über den Kabelwiderstand aus den kabelspezifischen Daten und den gemessenen Stromwerten zu ermitteln, und/oder bevorzugt die ermittelte bzw. errechnete Verlustleistung von der via der Ladestation in der Ladestation bzw. am ladestationsseitigen Ende des Ladekabels bereitgestellten, berechneten bzw. gemessenen Energie abzuziehen.

Erfindungsgemäß ist die Rechenvorrichtung ausgebildet und eingerichtet ist, die kabelspezifischen Daten über eine primär zur Signalübertragung und/oder Energieübertragung vorgesehene Leitung eines an den Ladekabelanschluss angeschlossenen Ladekabels auszulesen.

Durch die Ladestation sind die hinsichtlich des Ladekabels beschriebenen Vorteile und Wirkungen in analoger Weise erzielt. Entsprechend wird auf eine wiederholende Beschreibung dieser Vorteile und Wirkungen an dieser Stelle verzichtet und auf die obige Beschreibung verwiesen.

Vorzugsweise ist eine zur Energieübertragung vorgesehene Leitung zur Energieübertragung zum Speicherbaustein vorgesehen. Diese Leitung ist bevorzugt separat zu den Powerleitungen des Ladekabels.

Gemäß einer bevorzugten Ausführungsform ist die Rechenvorrichtung ausgebildet und eingerichtet, die kabelspezifischen Daten aus einem im Ladekabel angeordneten Speicherbaustein, der mit mindestens einer der primär zur Signalübertragung und/oder Energieübertragung vorgesehenen Leitungen kommunikativ verbunden ist, um über die mindestens eine verbundene Leitung zusätzlich zur Signalübertragung und/oder Energieübertragung eine Kommunikation mit der Ladestation zu ermöglichen, auszulesen.

Gemäß einer weiteren bevorzugten Ausführungsform ist die Ladestation in einem "Laden"-Modus betreibbar, in welchem die elektrische Energie zum Laden der Traktionsbatterie, bevorzugt über mindestens einen Leiterkontakt, übertragen wird, und/oder Signale, bevorzugt Sensorsignale, bevorzugt über mindestens einen Signalkontakt, übertragen werden.

Die Ladestation ist vorzugsweise ferner ausgebildet und eingerichtet, in einem "Kein-Laden"-Modus betreibbar zu sein, in welchem kein Übertragen der elektrischen Energie zum Laden der Traktionsbatterie erfolgt, wobei die Ladestation bevorzugt eingerichtet und ausgebildet, das Auslesen der kabelspezifischen Daten im "Kein-Laden"-Modus durchzuführen.

Alternativ kann der Speicherbaustein ausgebildet sein, im "Laden"-Modus und im "Kein-Laden"-Modus ausgelesen zu werden. Vorzugsweise ist der Speicherbaustein permanent auslesbar ausgebildet. Die Ladestation und/oder der Speicherbaustein müssen den Lademodus mithin nicht kennen, um den Speicherbaustein auszulesen bzw. mit diesen zu kommunizieren.

Die Powerleitungen, mithin die Ladeleitungen, auf welchen die Energie für die Fahrzeugbatterie fließt, können bevorzugt separat, anders ausgedrückt unabhängig von dem Speicherbaustein im Kabel angeordnet sein. Sie sind mithin nicht mit dem Speicherbaustein verbunden und/oder verbindbar.

Vorzugsweise ist die Ladestation eingerichtet und ausgebildet, ein Übertragen der elektrischen Energie zum Laden der Traktionsbatterie nur freizugeben, wenn zuvor die kabelspezifischen Daten ausgelesen wurden und bevorzugt zumindest ein zur Ermittlung der Kabelverluste erforderlicher Kabelwiderstand ermittelt wurde. Dadurch kann die Genauigkeit der zum Laden der Fahrzeugbatterie tatsächlich abgegebene Energie besonders genau ermittelt werden.

Bei der Verwendung anderer Leitungen als eines Leitungspaares eines Sensors im Ladekabel kann eine Logikschaltung vorgesehen sein, mittels welchem unterschiedliche Kommunikationsleitungen angesprochen werden. Vorzugsweise ist der Logikschaltung eingerichtet und ausgebildet, auszuwerten, ob es sich um primär über die Leitung zu übertragende Signale oder um Daten aus dem Speicherbaustein handelt. Die Logikschaltung kann beispielsweise als digitale Schaltung, als analoger Schaltkreis oder als eine Mischform der beiden vorgenannten ausgebildet sein.

Eine der oben gestellten Aufgaben wird weiterhin durch ein Ladesystem zur Übertragung elektrischer Energie von einer Ladestation an eine Traktionsbatterie zum Laden der Traktionsbatterie, bevorzugt zum Laden der Traktionsbatterie eines Elektrofahrzeugs mit den Merkmalen des Anspruchs 15 gelöst. Vorteilhafte Weiterbildungen ergeben sich aus den Unteransprüchen sowie der vorliegenden Beschreibung und den Figuren.

Entsprechend wird ein Ladesystem zur Übertragung elektrischer Energie von einer Ladestation an eine Traktionsbatterie zum Laden der Traktionsbatterie, bevorzugt zum Laden der Traktionsbatterie eines Elektrofahrzeugs, mittels eines mit der Ladestation und der Traktionsbatterie verbundenen Ladekabels, vorgeschlagen.

Das Ladesystem umfasst ein Ladekabel gemäß einer der vorstehenden Ausführungsformen und/oder eine Ladestation gemäß einer der vorstehenden Ausführungsformen.

Durch das Ladesystem können die hinsichtlich des Ladekabels und/oder der Ladestation beschriebenen Vorteile und Wirkungen in analoger Weise erzielt werden. Entsprechend wird auf eine wiederholende Beschreibung dieser Vorteile und Wirkungen an dieser Stelle verzichtet und auf die obige Beschreibung verwiesen.

Eine der oben gestellten Aufgaben wird weiterhin durch ein Verfahren zur Übertragung von elektrischer Energie von einer Ladestation an eine Traktionsbatterie zum Laden der Traktionsbatterie, bevorzugt zum Laden der Traktionsbatterie eines Elektrofahrzeugs mit den Merkmalen des Anspruchs 16 gelöst. Vorteilhafte Weiterbildungen des Verfahrens ergeben sich aus den Unteransprüchen sowie der vorliegenden Beschreibung und den Figuren.

Entsprechend wird ein Verfahren zur Übertragung von elektrischer Energie von einer Ladestation an eine Traktionsbatterie zum Laden der Traktionsbatterie, bevorzugt zum Laden der Traktionsbatterie eines Elektrofahrzeugs, vorgeschlagen, umfassend die Schritte des Bereitstellens von elektrischer Energie via der Ladestation, des Leitens der elektrischen Energie von der Ladestation zur Traktionsbatterie via eines mit der Ladestation und der Traktionsbatterie verbundenen Ladekabels, und des Berechnens von während der Energieübertragung an die Traktionsbatterie im Ladekabel auftretenden Verlusten mittels kabelspezifischer Daten.

Erfindungsgemäß werden die kabelspezifischen Daten über zumindest eine primär zur Signalübertragung und/oder Energieübertragung vorgesehene Leitung des Ladekabels aus einem mit der mindestens einen Leitung kommunikativ verbundenen, im Ladekabel angeordneten Speicherbaustein ausgelesen.

Durch das Verfahren können die hinsichtlich des Ladekabels, der Ladestation und/oder des Ladesystems beschriebenen Vorteile und Wirkungen in analoger Weise erzielt werden. Entsprechend wird auf eine wiederholende Beschreibung dieser Vorteile und Wirkungen an dieser Stelle verzichtet und auf die obige Beschreibung verwiesen.

Gemäß einer bevorzugten Ausführung erfolgt das Auslesen der kabelspezifischen Daten, wenn keine Energie zum Laden der Traktionsbatterie übertragen wird.

Vorzugsweise kann zwischen einem "Laden"-Modus, in welchem die elektrische Energie zum Laden der Traktionsbatterie übertragen wird und/oder Signale, bevorzugt Sensorsignale übertragen werden, und einem "Kein-Laden"- Modus, in welchem kein Übertragen der elektrischen Energie zum Laden der Traktionsbatterie erfolgt, geschalten werden, wobei bevorzugt das Auslesen der kabelspezifischen Daten im "Kein-Laden"-Modus erfolgt.

### Kurze Beschreibung der Figuren

Bevorzugte weitere Ausführungsformen der Erfindung werden durch die nachfolgende Beschreibung der Figuren näher erläutert. Dabei zeigen:
Figur 1 schematisch eine Seitenansicht eines Ladesystems zum Laden einer Traktionsbatterie eines Elektrofahrzeugs;
Figur 2 schematisch eine Seitenansicht eines Ladekabels des Ladesystems aus Figur 1;
Figur 3 schematisch eine Schnittansicht eines Ladekabels gemäß einer weiteren Ausführungsform im Bereich eines fahrzeugseitigen Steckers;
Figur 4 schematisch eine Schnittansicht durch ein Ladesystem zum Laden einer Traktionsbatterie gemäß einer weiteren Ausführungsform, und
Figur 5 schematisch eine Schnittansicht durch ein Ladesystem zum Laden einer Traktionsbatterie gemäß einer weiteren Ausführungsform.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

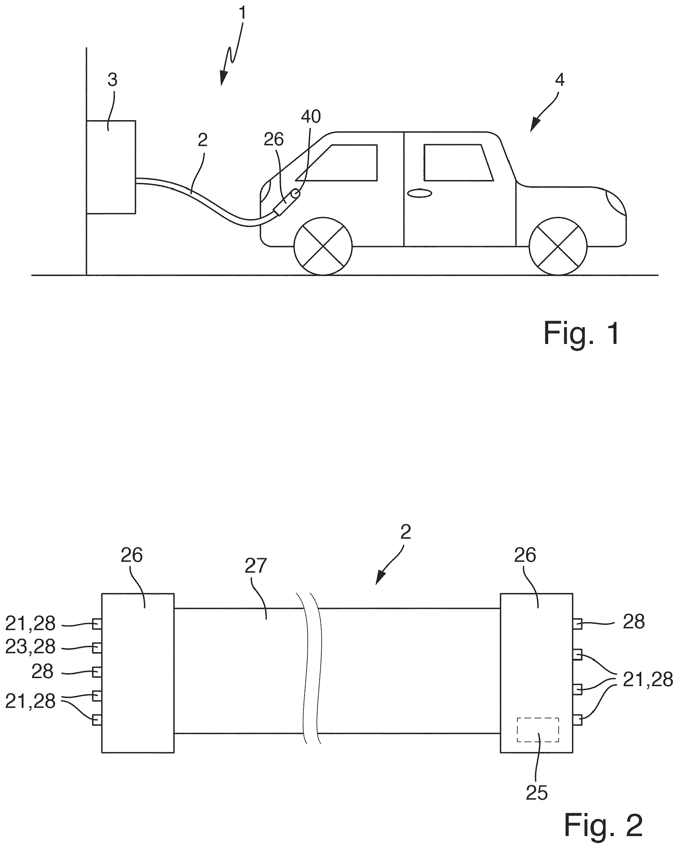

Figur 1 zeigt schematisch eine Seitenansicht eines Ladesystems 1 zum Laden einer Traktionsbatterie (nicht gezeigt) eines Elektrofahrzeugs 4. Das Ladesystem 1 umfasst eine vorliegend optional an einer Wand montierte Ladestation 3, welche über ein an die Ladestation 3 gestecktes Ladekabel 2 mit dem Elektrofahrzeug 4 verbunden ist, indem ein fahrzeugseitiger Stecker 26 des Ladekabels 2 in eine korrespondierend zum Stecker 26 ausgebildete Ladebuchse 40 des Elektrofahrzeugs 4 gesteckt ist. Der Stecker 26 und die Ladebuchse 40 können im Wesentlichen entsprechend eines Steckertyps nach IEC 62196 Typ 2, Typ 1 oder Typ 3, oder gemäß CHAdeMo-System ausgebildet sein, sie sind aber nicht darauf beschränkt.

Die Ladestation 3 ist vorliegend eingerichtet zum Betrieb mit kommerziellen Zwecken, mithin als kommerzielle Ladestation 3, bei welchen ein Betreiber Nutzern von Elektrofahrzeugen 4 gegen Gebühr das Aufladen ihrer Elektrofahrzeuge 4 an der Ladestation 3 zur Verfügung stellt. Entsprechend sind die im Ladekabel 2 während des Ladens der Traktionsbatterie auftretenden Energieverluste zu ermitteln. Vorliegend ist die Ladestation 3 ausgebildet und eingerichtet, die während der Energieübertragung an die Traktionsbatterie im Ladekabel 2 auftretenden Verluste mittels kabelspezifischer Daten zu berechnen, vorliegend durch das Produkt aus dem Quadrat des durch das Ladekabel 2 fließenden Stromes und dem Kabelwiderstand. Während der an das Ladekabel 2 abgegebene Strom und die Spannung zur Energieberechnung in der Ladestation 3 gemessen oder ermittelt werden können, wird die im Ladekabel 2 entstehende Verlustleistung über den aus den kabelspezifischen Daten ermittelten Kabelwiderstand der Powerleitungen und den gemessenen Stromwerten ermittelt. Hierzu können die Daten den Kabelwiderstand direkt beinhalten, oder sie umfassen Parameter, aus welchen sich der Kabelwiderstand berechnen lässt, wie etwa einen spezifischen Leitungswiderstand, einen Leitungsquerschnitt und eine Leitungslänge. Die Verluste aus dem Ladekabel 2 können für die korrekte Berechnung der am fahrzeugseitigen Ladestecker 26 abgegebenen elektrischen Energie von der gemessenen Energie, ermittelt in der Ladestation 3, abgezogen werden.

Figur 2 zeigt schematisch eine Seitenansicht eines Ladekabels 2 des Ladesystems aus Figur 1. Das Ladekabel 2 ist zur Übertragung elektrischer Energie von einer Ladestation 3 an eine Traktionsbatterie zum Laden der Traktionsbatterie, bevorzugt zum Laden einer Traktionsbatterie eines Elektrofahrzeugs 4 ausgebildet. Das Ladekabel 2 umfasst einen Kabelstrang 27, welcher eine Mehrzahl von parallel verlaufenden Leitungen (hier nicht gezeigt) umfasst. An den Enden des Kabelstranges 27 ist jeweils ein Stecker 26 ausgebildet. Die Leitungen sind in den Steckern 26 entsprechend ihrer Funktionalität mit in den Steckern 26 hierzu vorgesehenen Kontakten 28 verbunden, wobei die Stecker 26 unterschiedlich ausgebildet sind. Von den Kontakten 28 sind in Figur 2 lediglich einige beispielhaft dargestellt. Der in Figur 2 links dargestellte Stecker 26 entspricht einem ladestationsseitigen Stecker 26, der im Figur 2 rechts abgebildete Stecker 26 einem fahrzeugseitigen Stecker 26. Beide Stecker 26 umfassen jeweils eine Mehrzahl von Leiterkontakten 21, welche mit einer entsprechenden Mehrzahl von Leitungen zur Energieübertragung des Ladekabels 2 verbunden sind. Gemäß dieser Ausführung ist das Ladekabel 2 optional als DreiPhasen-Wechselstrom-Ladekabel 2 für 400 V ausgebildet und umfasst entsprechend einen Leiterkontakt 21 pro Phasenleiter, den sogenannten Außenleitern (L1, L2, L3), einen Leiterkontakt 21 für den Neutralleiter (N) und einen Leiterkontakt 21 für die Erdung bzw. den Schutzkontakt (PE).

Alternativ kann das ladestationsseitige Ende des Ladekabels, anstelle einen Stecker 26 wie abgebildet zu umfassen, ausgebildet sein, dass ladestationsseitig die Leitungen des Ladekabels 2 direkt mit der Ladestation 3 verbunden werden können, bevorzugt mit einer Schraub- oder Klemmverbindung, und/oder mit einem trennbaren oder untrennbaren Steckverbinder.

Entsprechend kann verhindert werden, dass ein Kunde das Ladekabel selbst abnehmen kann. Dies kann etwa aufgrund behördlicher Vorgaben zu verhindern sein. Das Ladekabel 2 kann ferner, wie in Figur 2 gezeigt, eine Mehrzahl von Sensoren (hier nicht gezeigt) im fahrzeugseitigen Stecker 26 umfassen, welche jeweils mit mindestens einer Leitung zur Signalübertragung verbunden sind. Die Leitungen zur Signalübertragung sind im ladestationsseitigen Stecker 26 mit entsprechenden Signalkontakten 23 verbunden.

Bei Ausführungsformen des Ladekabelsystemen ohne Sensoren ist ein Ladekabel 2 vorzugsweise so auszubilden, dass mindestens eine, vorzugsweise zwei Signalleitungen vorhanden sind.

Das Ladekabel 2 umfasst ferner einen Speicherbaustein 25, der zum Speichern kabelspezifischer Daten ausgebildet und eingerichtet ist und in das Ladekabel 2 integriert ist, vorliegend optional in den fahrzeugseitigen Stecker 26 integriert ist. Alternativ oder zusätzlich kann der Speicherbaustein 25 auch im Kabelstrang 27, beispielsweise am ladestationsseitigen Ende, bevorzugt, wenn das Ladekabel 2 ladestationsseitig keinen Stecker umfasst, und/oder im ladestationsseitigen Stecker 26 integriert sein.

Der Speicherbaustein 25 ist mit mindestens einer der Leitungen des Kabelstranges 27 kommunikativ verbunden, vorliegend mit zwei Leitungen, um über die verbundenen Leitungen zusätzlich zur Signalübertragung und/oder Energieübertragung eine Kommunikation mit der Ladestation 3 zu ermöglichen, wobei er vorzugsweise mit zwei Signalleitungen des Ladekabels 2 verbunden ist.

Die kabelspezifischen Daten können zumindest eines aus einer Länge des Ladekabels und/oder einer Länge des Kabelstranges, einem Kabelwiderstand, einem spezifischen Kabelwiderstand pro vorgegebener Längeneinheit, einem spezifischen Leitungswiderstand zumindest einer der Leitungen, einer Querschnittsfläche zumindest einer der Leitungen umfassen.

Ferner können die kabelspezifischen Daten eine Information über die Art des Kabels umfassen, wobei die Information zumindest eines aus einer Information über die Ladespannungsart, bevorzugt Wechselstrom oder Gleichstrom, über eine Anzahl der Phasen des Kabels, einem Fertigungsstandort, einer Seriennummer, einem Hersteller sein kann.

Der Speicherbaustein 25 kann optional ausgebildet und eingerichtet sein, die kabelspezifischen Daten offen oder verschlüsselt und/oder signiert zu speichern und/oder offen oder verschlüsselt und/oder signiert abrufbar bereitzustellen.

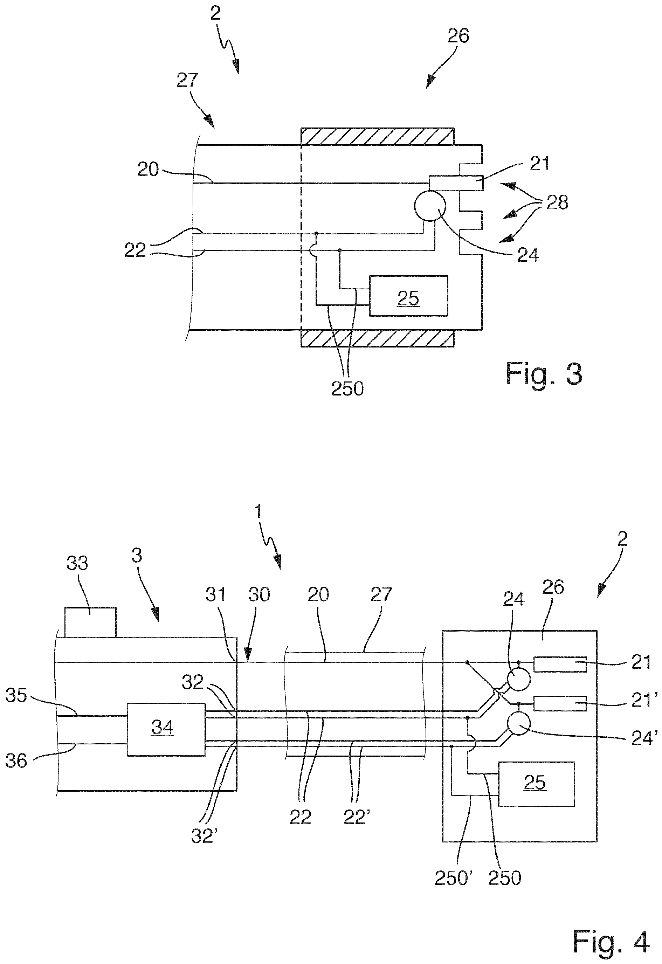

Figur 3 zeigt schematisch eine Schnittansicht eines Ladekabels 2 gemäß einer weiteren Ausführungsform im Bereich eines fahrzeugseitigen Steckers 26 des Ladekabels 2. Das Ladekabel 2 entspricht in seinem Aufbau im Wesentlichen jenem aus Figur 2. Das Ladekabel 2 umfasst unter anderem eine Leitung 20 zur Energieübertragung, beispielsweise mit 230 V Wechselstrom. Die Leitung 20 endet im fahrzeugseitigen Stecker 26 in einem Leiterkontakt 21. Die Temperatur des Leiterkontaktes 21 wird durch einen diesem zugeordneten Temperatursensor 24 überwacht. Der Temperatursensor 24 weist ein ihm zugeordnetes Paar an Leitungen 22 zur Signalübertragung, anders ausgedrückt "Signalleitungen" 22 auf, welche im Kabelstrang 27 bis zum ladestationsseitigen Stecker 26 verlaufen und dort von der Ladestation kontaktiert werden können, um die Signale des Sensors 24 abzugreifen.

Das beschriebene Sensorsystem, ausgebildet aus den Signalleitungen 22 und dem Temperatursensor 24, kann mehrfach vorhanden sein, bevorzugt wenn eine Mehrzahl von Leitungen zur Energieübertragung, insbesondere ausgebildet als Powerleitungen (u.a. die Leitungen "L", "L2" und/oder "L3" für Wechselstrom, oder die Leitungen "DC+" und/oder "DC-" für Gleichstrom), wie beispielhaft weiter unten in Hinblick auf Figur 4 unter Verweis auf das Bezugszeichen 22' beschrieben.

Im Stecker 26 ist ferner ein Speicherbaustein 25 in Form eines EEPROM angeordnet, welcher über zwei Kommunikationsanschlüsse 250 bzw. Anschlussleitungen mit den beiden Signalleitungen 22 des Sensors 24 kommunikativ verbunden ist, um über die verbundenen Leitungen 22 zusätzlich zur Signalübertragung der Signale des Sensors 24 eine Kommunikation zwischen der Speichereinheit 25 und der Ladestation 3 zu ermöglichen. Insbesondere kann via der Leitungen 22 die Ladestation 3 in dem Speicherbaustein 25 befindliche Daten auslesen.

Die Kommunikationsanschlüsse 250 können ferner dazu vorgesehen sein, den Speicherbaustein, bevorzugt einen darin vorgesehenen Speicher und/oder einen darin vorgesehenen Mikroprozessor mit Energie zu versorgen.

Alternativ kann der Speicherbaustein 25 auch teilweise oder ganz im ladestationsseitigen Stecker 26 (siehe Figur 2) - falls vorhanden - und/oder teilweise oder ganz im Kabelstrang 27 angeordnet sein, bevorzugt am ladeseitigen Ende des Ladekabels 2.

Der Speicherbaustein 25 kann alternativ auch mit anderen Leitungen 20, 22 des Ladekabels 2 kommunikativ verbunden sein, wie weiter oben im allgemeinen Teil beschrieben (etwa dem PE Leiter, PP Leiter, oder CP Leiter).

Ferner kann der Speicherbaustein 25 alternativ neben einem Speichermedium eine Recheneinheit umfassen, vorzugsweise einen Microcontroller, bevorzugt mit integriertem Speichermedium, bevorzugt einen 1-Wire-Speicherchip.

Bevorzugt ist der Speicherbaustein 25 über die kommunikativ mit ihm verbundenen Leitungen 22 ebenfalls mit Strom versorgt. Alternativ kann der Speicherbaustein 25 mit anderen bereits im Ladekabel 2 vorhandenen Leitungen 20, 22, die primär einem anderen Zweck bzw. einer anderen Funktion zugeordnet sind, zur Stromversorgung verbunden sein.

Mindestens eine der mit dem Speicherbaustein 25 verbundenen Leitungen 22 zur Signalübertragung kann optional als eine Datenbus-Leitung ausgebildet sein, bevorzugt als Standard-Bus, proprietärer Bus oder 1-Wire-Bus.

Bei Ausführungsformen, bei welchem im fahrzeugseitigen Stecker 28 kein Temperatursensor 24 vorhanden ist, werden vorzugsweise die für die Sensoren verwendeten Signalleitungen 22 im Kabelstrang 27 für die Kontaktierung des Speicherbausteins 25 verwendet.

Figur 4 zeigt schematisch eine Schnittansicht durch ein Ladesystem 1 zum Laden einer Traktionsbatterie eines Elektrofahrzeuges 4 gemäß einer weiteren Ausführungsform.

Eine Ladestation 3 ist über einen Ladekabelanschluss 30, welcher vorliegend über nur angedeutete, als Anschlussklemmen ausgebildete Kontakte 31, 32 ausgebildet ist, mit dem Ladekabel 2 verbunden.

Die Ladestation 3 umfasst mit einem Stromnetz (nicht gezeigt) verbundene Leiterkontakte 31 zur Energieversorgung, welche mit den Leitungen 20 zur Energieübertragung des Ladekabels 2 verbunden sind. Ferner umfasst die Ladestation 3 Signalkontakte 32, 32', die mit entsprechenden Leitungen 22, 22' zur Signalübertragung des Ladekabels 2 verbunden sind.

Das Ladekabel 2 umfasst einen fahrzeugseitigen Stecker 26 zum Einstecken in eine Ladebuchse 40 eines Elektrofahrzeuges 4 (siehe Figur 1). Der Stecker 26 umfasst eine Mehrzahl von Leiterkontakten 21, 21', wobei jeder Leiterkontakt 21, 21' mittels eines diesem zugeordneten Sensor 24, vorliegend jeweils als Temperatursensor 24 ausgebildet, temperaturüberwacht wird. Jeder Sensor 24 umfasst ein Paar von Signalleitungen 22, 22', die mit der Ladestation 3 über entsprechende Signalkontakte 32, 32' verbunden sind.

Der Speicherbaustein 25 zum Speichern der kabelspezifischen Daten ist wiederum im fahrzeugseitigen Stecker 26 angeordnet. Alternativ kann er aber auch, wie oben beschrieben, zumindest teilweise oder gänzlich an einem anderen Ort angeordnet sein, beispielsweise ladestationsseitig. Anders als in der Ausführungsform in Figur 3 ist der Speicherbaustein 25 mit einer Signalleitung 22 eines ersten Sensors 24 und mit einer Signalleitung 22' eines weiteren Sensors 24' kommunikativ verbunden.

Entsprechend unterscheidet sich der Datenübertragungspfad des Speicherbausteins 25 (umfassend eine Signalleitung 22 des ersten Paares und eine Signalleitung 22' des zweiten Paares) von den Datenübertragungspfaden der Sensoren 24, welche jeweils über ihr Paar von Signalleitungen 22 bzw. 22' kommunizieren.

Die Ladestation 3 kann optional eine Logikschaltung 34 umfassen, mittels welcher der Betriebszustand der Signalleitungen 22, 22' und/oder der Sensoren 24, 24 und des Speicherbausteins 25 geeignet geschalten werden können. Die Logikschaltung 34 kann optional in eine bevorzugt zentrale Recheneinheit 33 der Ladestation 3 integriert sein.

Optional kann die Ladestation 3 hier gezeigte separate Leitungen zur weiteren Kommunikation der Sensorsignale, vorliegend in Form eines Sensorbus' 36, und zur weiteren Kommunikation der aus dem Speicherbaustein 25 ausgelesenen Daten, vorliegend in Form eines Kommunikationsbus' 35, aufweisen, wobei die Logikschaltung 34 die Busse 35, 36 je nach Betriebsmodus kommunikativ schaltet.

Die Ladestation 3 umfasst ferner eine Rechenvorrichtung 33 zum Berechnen von während der Energieübertragung an die Traktionsbatterie im an dem Ladekabelanschluss 30 angeschossenen Ladekabel 2 auftretenden Verlusten mittels kabelspezifischer Daten des Ladekabels 2.

Die Ladestation 3 und entsprechend folgend das Ladekabel 2 können zwischen einem "Laden"-Modus und einem "Kein-Laden"-Modus als Betriebszustand wechseln. In "Laden"-Modus wird die elektrische Energie zum Laden der Traktionsbatterie über die Leiterkontakte 31 und die Leitungen 20 zur Energieübertragung an das Elektrofahrzeug übertragen. Zudem werden Signale der Sensoren 24 über die Signalleitungen 22, 22' und die Signalkontakte 32, 32' übertragen.

Im "Kein-Laden"- Modus erfolgt kein Übertragen der elektrischen Energie zum Laden der Traktionsbatterie. In diesem Betriebszustand kann die Ladestation 3 die Daten aus der Speichereinheit 25 auslesen und zur Ermittlung der zu erwartenden Energieverluste im Ladekabel 2 während des Ladens der Traktionsbatterie verwenden.

Mit anderen Worten kann die Ladestation 3 zum Auslesen des Speicherbausteins 25 via der Logikschaltung 34, welche synonym auch als "Auswertungsblock" bezeichnet werden kann, zwischen dem Zustand "Kein-Laden" und "Laden" unterschieden werden. Im Zustand "Kein-Laden" kommuniziert die Ladestation 3 über die Signalleitungen 22, 22' mit dem Speicherbaustein 25 im Stecker 26 und liest die im Speicherbaustein 25 auslesbaren kabelspezifischen Daten aus. Wird der fahrzeugseitige Stecker 26 mit einer komplementären Ladebuchse 40 eines Elektrofahrzeuges 4 verbunden (siehe Figur 1), schaltet der Auswertungsblock respektive die Logikschaltung 34 für den Zeitraum des Ladens in den Zustand "Laden". Dabei werden in der Ladestation 3 die im Zustand "Kein-Laden" vom Speicherbaustein 25 übermittelten kabelspezifischen Daten zur Berechnung der Energieverluste im Ladekabel genutzt.

Vorzugsweise ist die Logikschaltung 34 derart ausgebildet, dass sowohl im "Kein-Laden" als auch im "Laden" Zustand sowohl die Sensoren 24, 24' als auch der Speicherbaustein 25 ausgelesen und/oder ausgewertet werden können.

Die Information, ob der fahrzeugseitige Stecker 26 in eine entsprechende Ladebuchse 40 gesteckt ist, kann optional via eines mittels einer PP Leitung des Ladekabels 2 generiert werden.

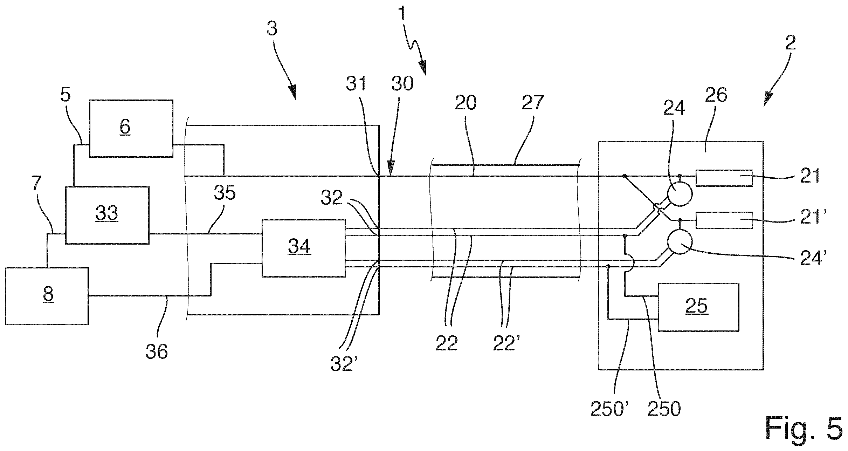

Figur 5 zeigt schematisch eine Schnittansicht durch ein Ladesystem 1 zum Laden einer Traktionsbatterie eines Elektrofahrzeuges 4 gemäß einer weiteren Ausführungsform. Das Ladesystem 1 entspricht im Wesentlichen jenem aus Figur 4. Zusätzlich ist hier noch eine Rechenvorrichtung 33 gezeigt, die über den Kommunikationsbus 5 mit dem Speicherbaustein 25 verbindbar ist, um die Kabelparameter zur Ermittlung der Verlustleistung im Ladekabel 2 auszulesen.

Ferner ist ein mit der Rechenvorrichtung 33 via einer Datenleitung 5 kommunizierendes Energiemessgerät 6 gezeigt, welches eingerichtet ist, den an das Ladekabel 2 abgegebenen Strom und die Spannung in der Ladestation 3 zu messen.

Die Rechenvorrichtung 33 ist ausgebildet, die Verlustleistung im Ladekabel 2 über den aus den kabelspezifischen Daten ermittelten Kabelwiderstand und den gemessenen Stromwerten zu berechnen, und ferner, die berechneten Verluste aus dem Ladekabel 2 für die korrekte Berechnung der am Ladestecker 26 abgegebenen elektrischen Energie von der via dem Energiemessgerät 6 gemessenen Energie abzuziehen.

Alternativ kann das Energiemessgerät 6 bzw. dessen Funktionalität in die Rechenvorrichtung 33 integriert sein.

Die Rechenvorrichtung 33 kommuniziert via einer Datenverbindung 7 mit einer weiteren Funktionseinheit 8 der Ladestation 3, welche vorliegend als Steuerung/Regelung zum Steuern/Regeln der Ladestation 3, beispielsweise deren Zustand bzw. Modus, dem Einschalten und Ausschalten der Energieübertragung zum Laden der Fahrzeugbatterie, und/oder zum Ansteuern der Rechenvorrichtung 33 und/oder des Energiemessgeräts 6, ausgebildet ist. Die weitere Funktionseinheit 8 ist via des Sensorbusses 36 mit den Sensoren 24 verbindbar.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezuqszeichenliste

- 1: System
- 2: Ladekabel
- 20: Leitung zur Energieübertragung
- 21: Leiterkontakt
- 22: Leitung zur Signalübertragung
- 23: Signalkontakt
- 24: Sensor
- 25: Speicherbaustein
- 250: Kommunikationsanschluss
- 26: Stecker
- 27: Kabelstrang
- 28: Kontakt
- 3: Ladestation
- 30: Ladekabelanschluss
- 31: Leiterkontakt
- 32: Signalkontakt
- 33: Rechenvorrichtung
- 34: Logikschaltung
- 35: Kommunikationsbus
- 36: Sensorbus
- 4: Elektrofahrzeug
- 40: Ladebuchse
- 5: Datenleitung
- 6: Energiemessgerät
- 7: Datenverbindung
- 8: Weitere Funktionseinheit

## Patentansprüche

1. Ladekabel (2) zur Übertragung elektrischer Energie von einer Ladestation (3) an eine Traktionsbatterie zum Laden der Traktionsbatterie, bevorzugt zum Laden einer Traktionsbatterie eines Elektrofahrzeugs (4), umfassend mindestens eine zur Signalübertragung ausgebildete und eingerichtete Leitung (22) und/oder mindestens eine zur Energieübertragung ausgebildete und eingerichtete Leitung (20), und einen Speicherbaustein (25), der zum Speichern kabelspezifischer Daten ausgebildet und eingerichtet ist,
**dadurch gekennzeichnet, dass**
der Speicherbaustein (25) mit mindestens einer der Leitungen (20, 22) kommunikativ verbunden ist, um über die verbundene Leitung (20, 22) zusätzlich zur Signalübertragung und/oder Energieübertragung eine Kommunikation mit der Ladestation (3) zu ermöglichen.

2. Ladekabel (2) gemäß Anspruch 1, **dadurch gekennzeichnet, dass** es dazu eingerichtet ist, in einem "Laden"-Modus betreibbar zu sein, in welchem die elektrische Energie zum Laden der Traktionsbatterie übertragen wird, bevorzugt über mindestens eine Leitung (20) zur Energieübertragung, und/oder Signale, bevorzugt Sensorsignale, übertragen werden, vorzugsweise über mindestens eine Leitung (22) zur Signalübertragung, und es dazu eingerichtet ist, in einem "Kein-Laden"- Modus betreibbar zu sein, in welchem kein Übertragen der elektrischen Energie zum Laden der Traktionsbatterie erfolgt, wobei das Ladekabel (2) bevorzugt eingerichtet und ausgebildet ist, die Kommunikation mit dem Speicherbaustein (25) im "Kein-Laden"-Modus bereitzustellen.

3. Ladekabel (2) gemäß Anspruch 1 oder 2, **dadurch gekennzeichnet, dass** der Speicherbaustein (25) in einem Kabelstecker (26) und/oder im Kabelstrang (27) angeordnet ist, und/oder **dass** der Speicherbaustein (25) ausgebildet und eingerichtet ist, die kabelspezifischen Daten offen oder verschlüsselt und/oder signiert zu speichern und/oder offen oder verschlüsselt und/oder signiert abrufbar bereitzustellen.

4. Ladekabel (2) gemäß einem der vorstehenden Ansprüche, **dadurch gekennzeichnet, dass** die kabelspezifischen Daten zumindest eines aus einer Länge des Ladekabels (2) und/oder einer Länge des Kabelstranges (27), einem Kabelwiderstand, einem spezifischen Kabelwiderstand pro vorgegebener Längeneinheit, einem spezifischen Leitungswiderstand zumindest einer der Leitungen (20, 22), einer Querschnittsfläche zumindest einer der Leitungen (20, 22), und/oder einer Information über die Art des Kabels (2) umfasst, wobei die Information zumindest eines aus einer Information über die Ladespannungsart, bevorzugt Wechselstrom oder Gleichstrom, über eine Anzahl der Phasen des Kabels, einem Fertigungsstandort, einer Seriennummer, einem Hersteller umfasst.

5. Ladekabel (2) gemäß einem der vorstehenden Ansprüche, **dadurch gekennzeichnet, dass** zumindest eine mit dem Speicherbaustein (25) verbundene Leitung (20, 25) zur Signalübertragung eine Signalleitung (22) für einen Sensor (24), bevorzugt einen Temperatursensor (24), eine Näherungs-Signalleitung (PP), oder eine Steuersignalleitung (CP) zum Austauschen von Steuersignalen zwischen Elektrofahrzeug (4) und Ladestation (3) ist.

6. Ladekabel (2) gemäß einem der vorstehenden Ansprüche, **dadurch gekennzeichnet, dass** mindestens eine Leitung (22) zur Signalübertragung, bevorzugt eine Steuersignalleitung (CP) zum Austauschen von Steuersignalen zwischen Elektrofahrzeug (4) und Ladestation (3), und/oder mindestens eine Leitung (20) zur Energieübertragung, bevorzugt eine Schutzkontakt-Leitung (PE) mit dem Speicherbaustein (25) zur Versorgung des Speicherbausteins (25) mit elektrischer Energie durch die Ladestation (3) verbunden ist, wobei bevorzugt die mindestens eine Leitung (20, 22) mit dem Speicherbaustein (25) zur Versorgung mit elektrischer Energie und zur Kommunikation verbunden ist.

7. Ladekabel (2) gemäß einem der vorstehenden Ansprüche, **dadurch gekennzeichnet, dass** der Speicherbaustein (25) ein Speichermedium, vorzugsweise einen EEPROM, umfasst, wobei der Speicherbaustein (25) bevorzugt ferner eine Recheneinheit, vorzugsweise einen Microcontroller, bevorzugt mit integriertem Speichermedium, umfasst, wobei der Speicherbaustein (25) bevorzugt ein 1-Wire-Speicherchip ist, wobei die Recheneinheit bevorzugt mit zumindest einer weiteren Leitung (22) zur Signalübertragung, bevorzugt einer weiteren Signalleitung (22) für einen weiteren Sensor (24), bevorzugt einen Temperatursensor (24), verbunden ist.

8. Ladekabel (2) gemäß einem der vorstehenden Ansprüche, **dadurch gekennzeichnet, dass** der Speicherbaustein (25) mit zumindest zwei Leitungen (20, 22) verbunden ist, wobei bevorzugt der Speicherbaustein (25) mit zwei Signalleitungen (22) eines Sensors (24), bevorzugt eines Temperatursensors (24), verbunden ist, oder bevorzugt der Speicherbaustein (25) mit einer Signalleitung (22) eines ersten Sensors (24), bevorzugt eines Temperatursensors (24), und mit einer Signalleitung (22') eines weiteren Sensors (24'), bevorzugt eines weiteren Temperatursensors (24'), verbunden ist.

9. Ladekabel (2) gemäß dem einem der vorstehenden Ansprüche, **dadurch gekennzeichnet, dass** mindestens eine Leitung (20, 22) zur Signalübertragung und/oder Energieübertragung sowie ein Microkontroller mit integriertem oder externen Speichermedium die Ladestation (3) mit dem Speicherbaustein (25) sowie einer vorgegebenen Anzahl von Sensoren (24), vorzugsweise Temperatursensoren (24), kommunikativ verbindet und versorgt, wobei die vorgegebene Anzahl von Sensoren (24) analoge und/oder digitale Sensoren (24) sein können, und/oder **dass** mindestens eine Leitung (22) zur Signalübertragung eine Datenbus-Leitung, bevorzugt Standard-Bus, ein proprietärer Bus oder ein 1-Wire-Bus, ist.

10. Ladestation (3) zur Übertragung elektrischer Energie an eine Traktionsbatterie zum Laden der Traktionsbatterie, bevorzugt zum Laden einer Traktionsbatterie eines Elektrofahrzeugs (4), umfassend zumindest einen Ladekabelanschluss (30) zum Anschließen eines Ladekabels (2) mit zumindest einem Leiterkontakt (31) zum Kontaktieren einer Leitung (20) zur Energieübertragung des Ladekabels (2) und/oder zumindest einem Signalkontakt (32) zur Kontaktierung einer Leitung (22) zur Signalübertragung des Ladekabels (2), und ferner umfassend eine mit dem zumindest einen Leiterkontakt (31) und/oder Signalkontakt (32) verbundenen Rechenvorrichtung (33) zum Berechnen von während der Energieübertragung an die Traktionsbatterie im an dem Ladekabelanschluss (30) angeschossenen Ladekabel (2) auftretenden Verlusten mittels kabelspezifischer Daten,
**dadurch gekennzeichnet, dass**
die Rechenvorrichtung (33) ausgebildet und eingerichtet ist, die kabelspezifischen Daten über eine primär zur Signalübertragung und/oder Energieübertragung vorgesehene Leitung (20, 22) eines an den Ladekabelanschluss (30) angeschlossenen Ladekabels (2) auszulesen.

11. Ladestation (3) gemäß dem vorstehenden Anspruch, **dadurch gekennzeichnet, dass** die Rechenvorrichtung (33) ausgebildet und eingerichtet ist, die kabelspezifischen Daten aus einem im Ladekabel (2) angeordneten Speicherbaustein (25), der mit mindestens einer der primär zur Signalübertragung und/oder Energieübertragung vorgesehenen Leitungen (20, 22) kommunikativ verbunden ist, um über die mindestens eine verbundene Leitung (20, 22) zusätzlich zur Signalübertragung und/oder Energieübertragung eine Kommunikation mit der Ladestation zu ermöglichen, auszulesen.

12. Ladestation (3) gemäß Anspruch 10 oder 11, **dadurch gekennzeichnet, dass** die Ladestation (3) in einem "Laden"-Modus betreibbar ist, in welchem die elektrische Energie zum Laden der Traktionsbatterie, bevorzugt über mindestens einen Leiterkontakt (31), übertragen wird und/oder Signale, bevorzugt Sensorsignale, bevorzugt über mindestens einen Signalkontakt (32), übertragen werden, und in einem "Kein-Laden"- Modus betreibbar ist, in welchem kein Übertragen der elektrischen Energie zum Laden der Traktionsbatterie erfolgt, wobei die Ladestation (3) bevorzugt eingerichtet und ausgebildet ist, das Auslesen der kabelspezifischen Daten im "Kein-Laden"-Modus durchzuführen.

13. Ladesystem (1) zur Übertragung elektrischer Energie von einer Ladestation (3) an eine Traktionsbatterie zum Laden der Traktionsbatterie, bevorzugt zum Laden der Traktionsbatterie eines Elektrofahrzeugs (4), mittels eines mit der Ladestation (3) und der Traktionsbatterie verbundenen Ladekabels (2),
**gekennzeichnet durch**
ein Ladekabel (2) gemäß einem der Ansprüche 1 bis 9 und/oder eine Ladestation (3) gemäß Anspruch 10 oder 11.

14. Verfahren zur Übertragung von elektrischer Energie von einer Ladestation (3) an eine Traktionsbatterie zum Laden der Traktionsbatterie, bevorzugt zum Laden der Traktionsbatterie eines Elektrofahrzeugs (4), umfassend die Schritte des
- Bereitstellens von elektrischer Energie via der Ladestation (3),
- Leitens der elektrischen Energie von der Ladestation zur Traktionsbatterie via eines mit der Ladestation und der Traktionsbatterie verbundenen Ladekabels (2), und
- Berechnens von während der Energieübertragung an die Traktionsbatterie im Ladekabel (2) auftretenden Verlusten mittels kabelspezifischer Daten,
**dadurch gekennzeichnet, dass**
die kabelspezifischen Daten über zumindest eine primär zur Signalübertragung und/oder Energieübertragung vorgesehene Leitung (20, 22) des Ladekabels (2) aus einem mit der mindestens einen Leitung (20, 22) kommunikativ verbundenen, im Ladekabel (2) angeordneten Speicherbaustein (25) ausgelesen werden.

15. Verfahren gemäß dem vorstehenden Anspruch, **dadurch gekennzeichnet, dass** das Auslesen der kabelspezifischen Daten erfolgt, wenn keine Energie zum Laden der Traktionsbatterie übertragen wird.
